(19) Europäisches Patentamt / European Patent Office / Office européen des brevets

(11) **EP 2 362 117 A2**

(12) **EUROPEAN PATENT APPLICATION**

(43) Date of publication:
**31.08.2011 Bulletin 2011/35**

(51) Int Cl.:
**F16H 61/02** (2006.01)

(21) Application number: **11153305.5**

(22) Date of filing: **04.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.02.2010 JP 2010040514**

(71) Applicant: **JATCO Ltd
Fuji-shi,
Shizuoka 417-8585 (JP)**

(72) Inventor: **Maruyama, Ikuo
Fuji-shi Shizuoka 417-8585 (JP)**

(74) Representative: **Grünecker, Kinkeldey,
Stockmair & Schwanhäusser
Anwaltssozietät
Leopoldstrasse 4
80802 München (DE)**

(54) **Oil temperature correction device and method for automatic transmission**

(57)      There is provided an oil temperature correction device for an automatic transmission. The automatic transmission having a torque converter and a transmission mechanism to which an output torque of a driving power source is inputted through the torque converter. The oil temperature correction device has an oil temperature sensor that detects a temperature of hydraulic oil in an oil pan of the transmission mechanism; and an oil temperature correction section that, when the temperature of the hydraulic oil detected by the oil temperature sensor is lower than a first threshold value, performs a sensor detection temperature correction process to correct the detected temperature of the hydraulic oil based on a heat generation amount of the torque converter.

**FIG.2**

START

S101 READ ENGINE-START OIL TEMPERATURE Temp_start

102 Temp_start ≤ 0°C ? — NO

YES

S103 TIMER START

S104 READ CURRENT OIL TEMPERATURE Temp_now

S105 Temp_now ≤ 10°C ? — NO

YES

S106 READ ENGINE ROTATION SPEED Ne, TURBINE ROTATION SPEED Nt AND ENGINE TORQUE Te

S107 CALCULATE TORQUE CONVERTER TORQUE RATIO $t_0$ FROM SPEED RATIO e (= Nt/Ne)

S108 CALCULATE TORQUE CONVERTER HEAT GENERATION AMOUNT $\Delta Q$
$\Delta Q = (2\pi/60) \times (Te \times Ne - t_0 \times Te \times Nt)$

S109 CALCULATE CORRECTED OIL TEMPERATURE Temp_correct
$Temp\_correct = Temp\_start + k \int_0^t f(\Delta Q)dt$

S110 SET CORRECTED OIL TEMPERATURE Temp_correct AS REFERENCE OIL TEMPERATURE

END

**Description**

BACKGROUND OF THE INVENTION

The present invention relates to an oil temperature correction device and method for an automatic transmission.
An automatic transmission for an automotive vehicle includes a hydraulically-operable transmission mechanism accommodated in a transmission case, with an oil pan covering and closing a lower opening of the transmission case, so that hydraulic oil used for operation and lubrication of the transmission mechanism can be recovered from the transmission case, stored in the oil pan and reused for operation and lubrication of the transmission mechanism. The automatic transmission further includes an oil pump, a valve unit and an automatic transmission control unit (ATCU). The oil pump is connected to the oil pan through an oil strainer so as to, when driven, suck in the hydraulic oil from the oil pan through the oil strainer, pressurize the hydraulic oil and then feed the pressurized hydraulic oil to the valve unit. The valve unit is fixed to a lower portion of the transmission case and equipped with a hydraulic control circuit (a solenoid, a spool and regulating valves etc.) to regulate the flow of the hydraulic oil from the oil pump to the transmission mechanism. The ATCU is configured to determine a target pressure of the hydraulic oil required to operate the transmission mechanism for a desired gear ratio and drive the hydraulic control circuit to control the supply of the hydraulic oil pressure to the transmission mechanism according to the target hydraulic pressure.
Herein, the hydraulic oil decreases in flowability with increase in viscosity under low temperature conditions. Under such low temperature conditions, the rise of the hydraulic oil pressure applied to the transmission mechanism becomes slow so that it takes a longer time for the transmission mechanism to achieve the desired gear ratio when the target hydraulic pressure is the same as that under ordinary temperature conditions. This results in an obstacle to the smooth gear shift of the transmission mechanism.
In order to ensure the smooth gear shift of the transmission mechanism even under the low temperature conditions, Patent Document 1 proposes that the ATCU is configured to correct the target hydraulic pressure according to a temperature of the hydraulic oil detected by an oil temperature sensor.

Patent Document 1: Japanese Laid-Open Patent Publication No. 2004-125040

SUMMARY OF THE INVENTION

In view of the fact that there is limited space in the automatic transmission, the oil temperature sensor is often disposed in the oil pan and, more specifically, at a position adjacent to an inner surface of the oil pan. Thus, there is a case that the temperature of the hydraulic oil detected by the oil temperature sensor (also simply referred to as "sensor detection oil temperature") may deviate from the actual temperature of the hydraulic oil flowing through the hydraulic control circuit after passing through the oil pan, the oil strainer and the oil pump (also simply referred to as "actual oil temperature"). For example, the sensor detection oil temperature tends to be lower than the actual oil temperature during a few minutes after the engine startup under the low temperature conditions. The deviation between the sensor detection oil temperature and the actual oil temperature is particularly large under the low temperature conditions of —10°C or lower. When the target hydraulic pressure is corrected according to such a sensor detection oil temperature, the amount of correction of the target hydraulic pressure becomes too large. This results in a shift shock due to excessive hydraulic pressure supply.
In order to reduce or eliminate the deviation between the sensor detection oil temperature and the actual oil temperature, it is conceivable to dispose the oil temperature sensor within the hydraulic control circuit. In such a case, however, the installation structure of the oil temperature sensor becomes complicated and raises an obstacle to the miniaturization of the hydraulic control circuit.
It is alternatively conceivable to dispose the oil temperature sensor in the oil pan at a position adjacent to an oil inlet port of the oil strainer i.e. an oil suction port of the oil pump. In this case, the oil temperature sensor interferes with the flow of the hydraulic oil into the oil inlet port of the oil strainer so as to cause increase in the negative suction pressure of the oil pump. Under the low temperature conditions where the hydraulic oil is high in viscosity, the interference of the oil temperature sensor with the flow of the hydraulic oil becomes more pronounced so as to cause further increase in the negative suction pressure of the oil pump as the hydraulic oil temperature decreases.
In view of the foregoing, it is an object of the present invention to provide an oil temperature correction device and method for an automatic transmission by which the operation of the automatic transmission would not be largely influenced by the deviation between the sensor detection temperature and the actual oil temperature even under the low temperature operation conditions.
Namely, there is provided according to one aspect of the present invention an oil temperature correction device for an automatic transmission, the automatic transmission having a torque converter and a transmission mechanism to which an output torque of a driving power source is inputted through the torque converter, the oil temperature correction device comprising: an oil temperature sensor that detects a temperature of hydraulic oil in an oil pan of the transmission mechanism; and an oil temperature correction section that, when the temperature of the hydraulic oil detected by the oil temperature sensor is lower than a first threshold value, performs a sensor detection temperature correction process to correct the detected temperature of the hydraulic oil based on a heat generation amount of the torque converter.

There is also provided according to another aspect of the present invention an oil temperature correction method for an automatic transmission, the automatic transmission having a torque converter and a transmission mechanism to which an output torque of a driving power source is inputted through the torque converter, the oil temperature correction method comprising: detecting a temperature of hydraulic oil in an oil pan of the transmission mechanism; determining a heat generation amount of the torque converter; and, when the detected temperature of the hydraulic oil is lower than a first threshold value, performing a sensor detection temperature correction process to correct the detected temperature of the hydraulic oil based on the heat generation amount of the torque converter.

The other objects and features of the present invention will also become understood from the following description.

BRIEF DESCRIPTION OF THE DRAWINGS

FIG. 1 is a schematic view of an automatic transmission with an automatic transmission control unit in which the present invention is embodied.

FIG. 2 is a flowchart of a low-temperature sensor detection temperature correction process of the automatic transmission control unit according to one embodiment of the present invention.

FIG. 3 is a diagram showing variations between the sensor detection temperature and actual temperature of hydraulic oil in a low-temperature atmosphere.

DESCRIPTION OF THE EMBODIMENTS

The present invention will be described in detail below with reference to the drawings.

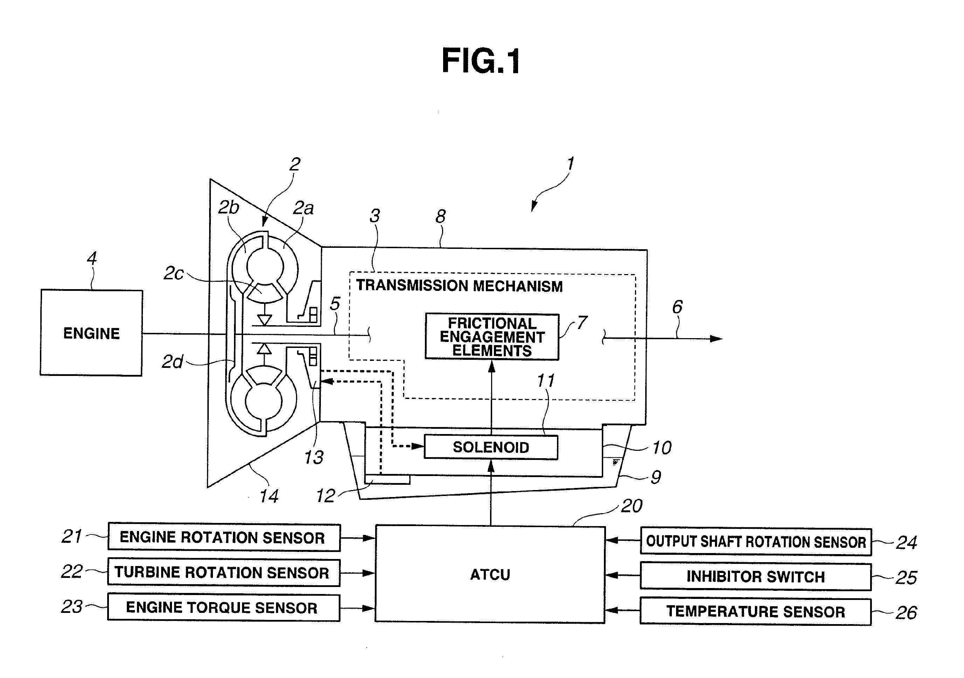

Referring to FIG. 1, an automatic transmission 1 for an automotive vehicle according to one exemplary embodiment of the present invention includes a torque converter 2 accommodated in a converter cover 14 and a transmission mechanism 3 accommodated in a transmission case 8 and connected to an engine 4 (as a driving power source) through the torque converter 2.

The torque converter 2 has a pump impeller 2a coupled to an output shaft of the engine 4, a turbine runner 2b coupled to an input shaft 5 of the transmission mechanism 3, a stator 2c and a lockup clutch 2d so that rotation of the engine 4 is hydraulically transmitted from the pump impeller 2a to the turbine runner 2b and then inputted to the input shaft 5 of the transmission mechanism 3.

The transmission mechanism 3 has its input and output shafts 5 and 6 arranged coaxially with each other. In the present embodiment, the transmission mechanism 3 is designed as a multi-speed transmission system. More specifically, the transmission mechanism 3 has front and rear planetary gear units (not specifically shown) disposed on the input and output shafts 5 and 6 and frictional engagement elements 7 actuated hydraulically to establish a driving power transmission path through the gear units by selective engagement and disengagement of the frictional engagement elements 7 for a desired gear ratio. An oil discharge hole is formed in the lower portion of the transmission case 8.

In the transmission mechanism 3, an oil pan 9 is fixed to an lower portion of the transmission case 8 to cover and close the oil discharge hole of the lower portion of the transmission case 8 so that hydraulic oil used for operation and lubrication of the friction engagement elements 7 of the transmission mechanism 3 can be discharged from the transmission case 8 into the oil pan 9 through the oil discharge hole.

The automatic transmission 1 further includes a valve unit 10, an oil strainer 12, an oil pump 13, a converter cover 14 and an automatic transmission control unit (ATCU) 20 as shown in FIG. 1.

The valve unit 10 is fixed to the lower portion of the transmission case 8, with an upper portion of the valve unit 10 located in the oil discharge hole and a lower portion of the valve unit 10 located in the hydraulic oil in the oil pan 9. Although not specifically shown in the drawings, the valve unit 10 is equipped with a hydraulic control circuit. The hydraulic control circuit generally includes a plurality of hydraulic lines to the frictional engagement elements 7, a valve spool arranged to connect and disconnect the hydraulic lines to and from the frictional engagement elements 7 and regulating valves arranged in the hydraulic lines to regulate the flow of the hydraulic oil to the frictional engagement elements 7. In the present embodiment, the valve unit 10 has a solenoid 11 arranged as a hydraulic actuation member in the hydraulic control circuit and driven under the control of the ATCU 20 to actuate the regulating valves and thereby control the supply of the hydraulic oil pressure to any of the frictional engagement elements 7 engaged for the desired gear ratio. Further, an oil communication hole is formed in the lower portion of the valve unit 10.

The oil strainer 12 is disposed in the oil pan 9 so as to cover therewith the oil communication hole of the valve unit 10.

The oil pump 13 is disposed in the converter cover 14 at a position between the torque converter 2 and the transmission mechanism 3 and adjacent to the torque converter 2 and is connected at an oil suction hole thereof in communication with the oil communication hole of the valve unit 10 through the oil strainer 12.

When the oil pump 13 is driven, the hydraulic oil is sucked from the oil pan 9 into the oil pump 13 through the oil strainer 12 and pressurized by the oil pump 13. The pressurized hydraulic oil is fed as a line pressure to the valve unit 10 (hydraulic control circuit) and then supplied to the transmission mechanism 3 for hydraulic operation and lubrication of the friction engagement elements 7 of the transmission mechanism 3.

It is herein noted in the present embodiment that, as the oil pump 13 is located adjacent to the torque converter 2 as mentioned above, the temperature rise of the hydraulic oil supplied from the oil pump 13 to the valve unit 10 (hydraulic control circuit) under low temperature conditions is largely influenced by heat generated from the torque converter 2. It is also noted that the heat generation amount of the torque converter 2 becomes large during the torque transmission as the driving torque is hydraulically transmitted through the torque converter 2 and the transmission mechanism 3.

Referring again to FIG. 1, the automatic transmission 1 further includes: an engine rotation sensor 21 that detects a rotation speed of the output shaft of the engine 4 and outputs to the ATCU20 a signal indicating the detected rotation speed of the engine output shaft (hereinafter referred to as "engine rotation speed Ne"); a turbine rotation sensor 22 that detects a rotation speed of the input shaft 5 of the transmission mechanism 3 and outputs to the ATCU 20 a signal indicating the detected rotation speed of the transmission input shaft 5 (hereinafter referred to as "turbine rotation speed Nt"); an engine torque sensor 23 that detects an output torque of the engine 4 and outputs to the ATCU 20 a signal indicating the detected engine output torque (hereinafter referred to as "engine torque Te"); and an output shaft rotation sensor 24 that detects a rotation speed of the output shaft 6 of the transmission mechanism 3 and outputs to the ATCU 20 a signal indicating the detected rotation speed of the transmission output shaft 6 (hereinafter referred to as "output shaft rotation speed No"). It is needless to say that the engine torque Te, the engine rotation speed Ne and the turbine rotation speed Nt correspond to the output torque of the driving power source, the input rotation speed of the torque converter 2 and the output rotation speed of the torque converter 2, respectively. The automatic transmission 1 further includes a manual shaft rotated in synchronization with operation of a shift lever, an inhibitor switch 25 attached to the manual shaft to output to the ATCU 20 a signal indicating a shift range selected by the shift lever and an oil temperature sensor 26 immersed in the hydraulic oil in the oil pan 9 to detect a temperature of the hydraulic oil in the oil pan 9 and output to the ATCU 20 a signal indicating the detected hydraulic oil temperature. In the present embodiment, the oil temperature sensor 26 is disposed in the oil pan 9 at a position apart from the oil suction hole of the oil pump 13 (the oil inlet port of the oil strainer 12) so that the oil temperature sensor 26 does not interfere with the flow of the hydraulic oil into the oil suction hole of the oil pump 13 and thereby does not cause increase in the negative suction pressure of the oil pump 13.

The ATCU 20 is configured to determine a command value (target value) of the hydraulic oil pressure supplied to any of the frictional engagement elements 7 for the desired gear ratio (hereinafter referred to as "hydraulic pressure command value") based on the output signals of the engine rotation sensor 21, the turbine rotation sensor 22, the engine torque sensor 23, the output shaft rotation sensor 24, the inhibitor switch 25 and the oil temperature sensor 26, and then, drive the solenoid 11 to control the supply of the hydraulic pressure according to the determined hydraulic pressure command value.

The ATCU 20 is further configured to perform a command pressure correction process upon determination of the hydraulic pressure command value so as to correct the hydraulic pressure command value based on the output signal of the oil temperature sensor 26. More specifically, the command pressure correction process is performed by setting the temperature of the hydraulic oil detected by the oil temperature sensor 26 as a reference oil temperature, retrieving a command pressure correction amount from a correction map with reference to the reference oil temperature, correcting the hydraulic pressure command value by the retrieved correction amount, and then, generating a command signal to drive the solenoid 11 based on the corrected hydraulic pressure command value.

Herein, the correction map defines a relationship of the temperature of the hydraulic oil and the amount of correction of the hydraulic pressure command value and has been prepared by experiment and stored in a memory (not shown) of the ATCU 20. In the present embodiment, the correction map is so defined that the amount of correction of the hydraulic pressure command value increases with decrease in the temperature of the hydraulic oil in view of the fact that, under the low temperature conditions where the hydraulic oil is high in viscosity, there is a tendency that the rise and response of the hydraulic oil pressure becomes low. When the correction amount of the hydraulic pressure command value increases with decrease in the temperature of the hydraulic oil as defined by the correction map, the hydraulic pressure command value can be corrected so as to raise the engagement pressure of the frictional engagement elements 7 quickly and improve the rise and response of the hydraulic pressure under the low temperature conditions.

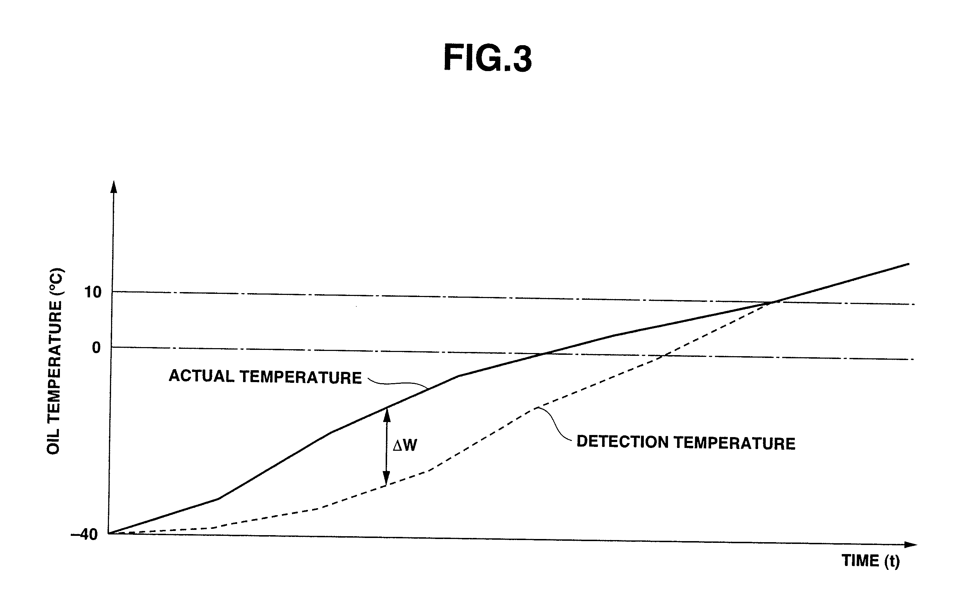

As shown in FIG. 3, there is however a large deviation ΔW between the detection temperature of the oil temperature sensor 26 (sensor detection oil temperature) and the actual temperature of the hydraulic oil flowing through the hydraulic control circuit from the oil strainer 12 and the oil pump 13 (actual oil temperature) in the case e.g. where the vehicle starts running immediately after a start of the engine 4 under the low temperature conditions. In such a case, when the command pressure correction process is performed based on the sensor detection oil temperature, the hydraulic pressure command value is set to an excessively high value by the influence of the temperature deviation ΔW. The operation of the automatic transmission 1 (transmission mechanism 3) becomes thus affected by the temperature deviation ΔW, whereby there occurs a shift shock etc. due to excessive hydraulic pressure supply.

In order to avoid the above shift shock problem, the ATCU 20 is configured to perform a low-temperature sensor detection temperature correction process so as to correct the detection temperature of the oil temperature sensor 26 under the low temperature conditions. In the present embodiment, the oil pump 13 is located adjacent to the torque converter 2 so that the temperature rise of the hydraulic oil supplied from the oil pump 13 to the valve unit 10 (hydraulic control circuit) under the low temperature conditions, notably the temperature rise of the hydraulic oil supplied to operate the automatic transmission 1 (transmission mechanism 3) immediately after the start of the engine 4 under the low temperature conditions, is largely influenced by the heat generated from the torque converter 2 as mentioned above. The detection temperature of the oil temperature sensor 26 is thus corrected in consideration of the heat generation amount the torque converter 2 in the low-temperature sensor detection temperature correction process.

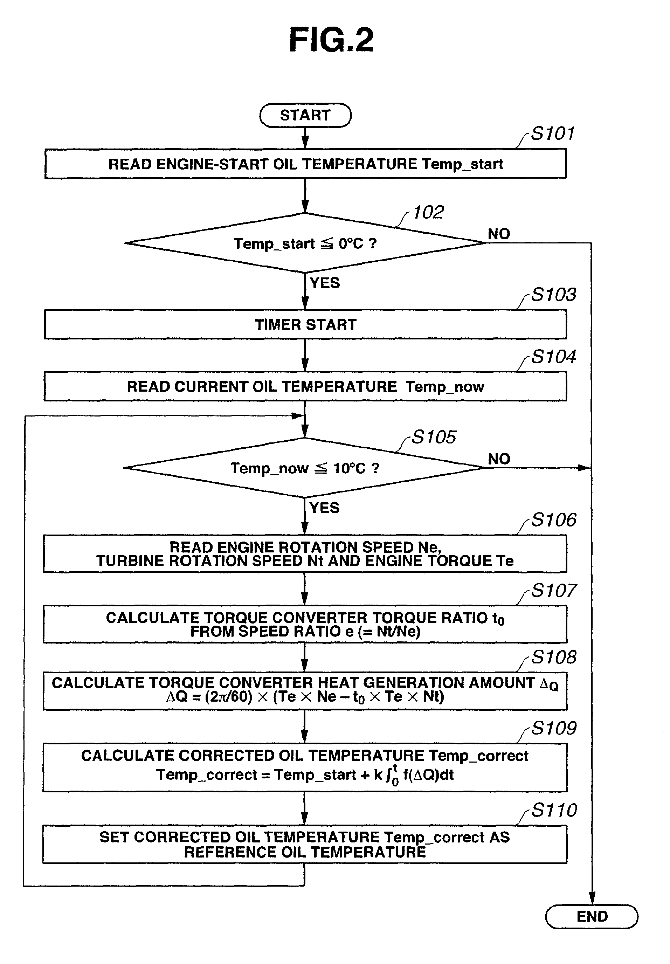

More specifically, the low-temperature sensor detection temperature correction process is performed by the following procedure as shown in FIG. 2.

At step S 101, the ATCU 20 reads, based on the output signal of the oil temperature sensor 26, a value of the temperature of the hydraulic oil first detected after the start of the engine 4 (hereinafter referred to as "engine-start oil temperature Temp_start"). The process goes to step S102.

At step S 102, the ATCU 20 checks whether the engine-start oil temperature Temp_start is lower than or equal to a first threshold value and, when the engine-start oil temperature Temp_start is lower than or equal to the first threshold value, judges that the hydraulic oil is in a low temperature state where the low-temperature sensor detection temperature correction process should be performed. If Temp_start ≥ 0°C (Yes at step S102), the process goes to step S103. If Temp-start > 0°C (No at step S102), the process goes to the end.

It has been confirmed by various experimental results that, when the oil temperature is lower than or equal to -10°C, the deviation ΔW between the sensor detection oil temperature and the actual oil temperature becomes particularly large as shown in FIG. 3 so as to provide a large influence on the operation of the automatic transmission 1 (transmission mechanism 3) and cause a shift shock etc. In the present embodiment, the first threshold value is thus set to 0°C in order to execute the low-temperature sensor detection temperature correction process assuredly before the influence of the temperature deviation ΔW on the operation of the automatic transmission 1 becomes pronounced.

At step S103, the ATCU 20 starts a timer to count an elapsed time t from the detection of the engine-start oil temperature Temp_start, which is equivalent to the time elapsed from the start of the engine 4. The process then goes to step S 104.

At step S 104, the ATCU 20 reads, based on the output signal of the oil temperature sensor 26, a currently detected value of the temperature of the hydraulic oil (hereinafter referred to as "current oil temperature Temp_now). The process goes to step S105.

At step S105, the ATCU 20 checks whether the current oil temperature Temp_now is lower than or equal to a second threshold value higher than the first threshold value and, when the current oil temperature Temp_now is lower than or equal to the second threshold value, judges that that the hydraulic oil is still in the low temperature state where the low-temperature sensor detection temperature correction process should be performed. If Temp_now ≤ 10°C (Yes at step S105), the process goes to step S106. If Temp_now > 10°C (No at step S105), the process goes to the end.

In the present invention, the second threshold value is set to 10°C because it has been confirmed by various experimental results that the deviation ΔW between the sensor detection oil temperature and the actual oil temperature tends to be relatively large under the temperature conditions of 10°C or lower and becomes substantially zero under the temperature conditions exceeding 10°C as shown in FIG. 3. Further, the linearity of the temperature data can be secured when the low-temperature sensor detection temperature correction process is completed at the time when the deviation ΔW between the sensor detection oil temperature and the actual oil temperature becomes substantially zero. This makes it possible to, in the case of correcting the hydraulic pressure command value based on the sensor detection oil temperature, suitably prevent abrupt variation in the correction amount of the hydraulic pressure command value before and after the completion of the low-temperature sensor detection temperature correction process.

Preferably, the second threshold value may vary depending on a distance between the oil temperature sensor 26 and the oil suction hole of the oil pump 26 (the oil inlet port of the oil strainer 12). As a result of researches on the position of the oil temperature sensor 26 in the oil pan 9, it has been found that the deviation ΔW between the sensor detection oil temperature and the actual oil temperature becomes smaller as the distance from the oil temperature sensor 26 to the oil suction hole of the oil pump 26 (the oil inlet port of the oil strainer 12) decreases. This means that, in FIG. 3, the position of intersection of the sensor detection oil temperature and the actual oil temperature would shift from 10°C toward 0°C. It is possible to avoid excessive correction of the detection temperature of the oil temperature sensor 26 after the sensor detection oil temperature agrees with the actual oil temperature, by varying the second threshold value in such a manner that the second threshold value becomes closer to 0°C, i.e., the first threshold value as the distance between the oil temperature sensor 26 and the oil suction hole of the oil pump 26 (the oil inlet port of the oil strainer 12) decreases.

At step S 106, the ATCU 20 reads the current engine rotation speed Ne, turbine rotation speed Nt and engine torque Te based on the output signals of the engine rotation sensor 21, the turbine rotation sensor 22 and the engine torque sensor 23, respectively. The process goes to step S107.

At step S 107, the ATCU 20 calculates a speed ratio e from the current engine rotation speed Ne and turbine rotation speed Nt by the following equation [1].

$$e = Nt/Ne \quad [1]$$

The ATCU 20 further calculates, at step S 107, a torque ratio t0 based on the speed ratio e in view of the characteristics of the torque converter 2 (the torques of the pump impeller 2a and the turbine runner 2b that can be determined according to the speed ratio e etc.). The process then goes to step S108.

At step S108, the ATCU 20 calculates the heat generation amount $\Delta Q$ of the torque converter 2 by the following equation [2].

$$\Delta Q = (2\pi/60) \times (Te \times Ne - t_0 \times Te \times Nt) \quad [2]$$

The process goes to step S109.

At step S 109, the ATCU 20 corrects the detection temperature of the oil temperature sensor 26 by the following equation [3]:

$$Temp\_correct = Temp\_start + k \int_0^t f(\Delta Q)dt \quad [3]$$

where Temp_correct is the corrected oil temperature; t is the time elapsed from the start of the timer to the present (i.e. the time elapsed from the start of the engine 4); and k is the factor for conversion of the heat generation amount to a temperature value.

The temperature rise of the hydraulic oil supplied from the oil pump 13 to the valve unit 10 is largely influenced by the heat generation amount $\Delta Q$ of the torque converter 2 under the low temperature conditions as mentioned above. In the equation [3], the gradient of the temperature rise of the hydraulic oil (the degree of temperature rise of the hydraulic oil per unit time) is set as the function $f(\Delta Q)$ of the heat generation amount $\Delta Q$ of the torque converter 2. The corrected oil temperature Temp_correct is thus determined by converting the heat generation amount $\Delta Q$ of the torque converter 2 to the temperature value and adding the temperature value corresponding to the heat generation amount $\Delta Q$ of the torque converter 2 to the engine-start oil temperature Temp-start. The process goes to step S 110 after step S109.

At step S110, the ATCU 20 sets the corrected oil temperature Temp_correct as the reference oil temperature so as to retrieve the correction amount of the hydraulic pressure command value from the correction map with reference to the reference oil temperature (corrected oil temperature Temp_correct) in the command pressure correction process.

In this way, the ATCU 20 has an oil temperature correction section or means that performs the low-temperature sensor detection temperature correction process to determine the corrected detection temperature Temp_correct of the oil temperature sensor 26 based on the heat generation amount $\Delta Q$ of the torque converter 2 under the low temperature conditions where the detection temperature Temp_now of the oil temperature sensor 26 at the time of start of the engine 4 is lower than or equal to the first threshold value (0°C) and a hydraulic oil control section or means that determines the hydraulic pressure command value and, when the corrected sensor detection temperature Temp_correct has been obtained through the low-temperature sensor detection temperature correction process, corrects the hydraulic pressure command value based on the corrected sensor detection temperature Temp_correct and drives the hydraulic control circuit (solenoid 11) to control the supply of the hydraulic oil pressure to the transmission mechanism 3 according to the corrected hydraulic pressure command value.

By the low-temperature sensor detection temperature correction process, the corrected sensor detection temperature Temp_correct is made higher than the current detection temperature Temp_now of the oil temperature sensor 26 so as to be closer to the actual temperature of the hydraulic oil than the current detection temperature Temp_now of the oil temperature sensor 26. When such a corrected sensor detection temperature Temp_correct is adopted as the reference oil temperature in the command pressure correction process, the correction amount of the hydraulic pressure command value would not be set to an excessively high value and can be set more appropriately than that obtained without the sensor detection temperature correction process. It is therefore possible to correct the detection temperature of the oil temperature sensor 26 as appropriate and, even under the low temperature conditions where there is a large deviation ΔW between the sensor detection oil temperature and the actual oil temperature, effectively prevent the occurrence of a shift shock of the automatic transmission 1 (transmission mechanism 3) due to excessive hydraulic pressure supply and avoid the operation of the automatic transmission 1 from being largely influenced by the deviation ΔW between the sensor detection oil temperature and the actual oil temperature.

As there is no need to dispose the oil temperature sensor 26 in the hydraulic control circuit of the valve unit 10 or at a position adjacent to the oil inlet port of the oil strainer 12, it is possible address the problem of the temperature deviation ΔW without increase in cost and possible to improve the positioning flexibility of the oil temperature sensor 26. It is possible to prevent the interference of the flow of the hydraulic oil into the oil suction hole of the oil pump 13 with the oil temperature sensor 26 and thereby avoid increase in the negative suction pressure of the oil pump 13 when the oil temperature sensor 26 is disposed in the oil pan 9 at the position apart from the oil suction hole of the oil pump 13 (the oil inlet port of the oil strainer 12).

The sensor detection temperature correction process is executed during the time period in which the current detection temperature Temp_now of the oil temperature sensor 26 is in the range from the first threshold value (0°C) to the second threshold value (10°C) and completed at the time when the current detection temperature Temp_now of the oil temperature sensor 26 exceeds the second threshold value. As already mentioned above, the deviation ΔW between the sensor detection oil temperature and the actual oil temperature is relatively large when the oil temperature is lower than or equal to 10°C. It is thus possible to correct the detection temperature of the oil temperature sensor 26 and set the correction amount of the hydraulic pressure based on the corrected detection temperature of the oil temperature sensor 26 only during the required time period where the deviation ΔW between the sensor detection oil temperature and the actual oil temperature is relatively large.

Further, the sensor detection temperature correction process is performed by calculating the heat generation amount ΔQ of the torque converter 2 from the engine torque Te, the engine rotation speed Ne, the turbine rotation speed Nt and the torque ratio t0 of the torque converter 2 according to the above equation [2], and then, determining the corrected sensor detection temperature Temp_correct from the engine-start detection temperature Temp_start of the oil temperature sensor 26, the time t elapsed from the start of the engine 4, the heat generation amount ΔQ of the torque converter 2 and the conversion factor k according to the above equation [3]. This enables appropriate correction of the detection temperature of the oil temperature sensor 26 on the basis of the outputs signals of the sensors of the automatic transmission 1.

Furthermore, the second threshold value preferably varies depending on the distance between the oil temperature sensor 26 and the oil suction hole of the oil pump 26 (the oil inlet port of the oil strainer 12) in the sensor detection temperature correction process in such a manner that the second threshold value becomes closer to the first threshold value as the distance between the oil temperature sensor 26 and the oil suction hole of the oil pump 26 (the oil inlet port of the oil strainer 12) decreases. This avoids excessive correction of the detection temperature of the oil temperature sensor 26 after the sensor detection oil temperature agrees with the actual oil temperature.

The entire contents of Japanese Patent Application No. 2010-040514 (filed on February 25, 2010) are herein incorporated by reference.

Although the present invention has been described with reference to the above-specific embodiments of the invention, the invention is not limited to these exemplary embodiments. Various modification and variation of the embodiments described above will occur to those skilled in the art in light of the above teachings.

In the above embodiment, the transmission mechanism 3 is designed as the multi-speed transmission mechanism as mentioned above. There can alternatively suitably be adopted as the transmission mechanism 3 a continuously variable transmission mechanism in which primary and secondary pulleys are drivingly connected by a belt and hydraulically actuated to change the groove widths of the primary and secondary pulleys and thereby achieves a desired gear ratio according to the radii of the belt in contact with these pulleys. In this case, the valve unit 10 (hydraulic control circuit) is configured to regulate the flow of the hydraulic oil to hydraulic chambers of the primary and secondary pulleys.

Moreover, the detection temperature of the oil temperature sensor 26 is corrected in view of the heat generation amount ΔQ of the torque converter 2 in the low-temperature sensor detection temperature correction process so as to determine the corrected sensor detection oil temperature Temp_correct as the sum of the engine-start oil temperature Temp_start and the temperature value corresponding to the heat generation amount ΔQ of the torque converter 2 in the above embodiment. The detection temperature of the oil temperature sensor 26 can however alternatively be corrected based on the heat generation amount of the other heat generating part(s) such as clutch or brake in the automatic transmission 1 or based on both of the heat generation amount of the torque converter 2 and the heat generation amount of the other heat generating part(s). This makes it possible to determine the corrected detection oil temperature Temp_correct to be more closer to the actual temperature of the hydraulic oil flowing through the hydraulic control circuit.

The scope of the invention is defined with reference to the following claims.

**Claims**

1. An oil temperature correction device for an automatic transmission, the automatic transmission having a torque converter and a transmission mechanism to which an output torque of a driving power source is inputted through the torque converter, the oil temperature correction device comprising:

   an oil temperature sensor that detects a temperature of hydraulic oil in an oil pan of the transmission mechanism; and
   an oil temperature correction section that, when the temperature of the hydraulic oil detected by the oil temperature sensor is lower than a first threshold value, performs a sensor detection temperature correction process to correct the detected temperature of the hydraulic oil based on a heat generation amount of the torque converter.

2. The oil temperature correction device according to claim 1, further comprising a hydraulic pressure control section that controls a pressure of the hydraulic oil supplied to the transmission mechanism for operation and lubrication of the transmission mechanism based on the detected temperature of the hydraulic oil,
   wherein, when the detected temperature of the hydraulic oil has been corrected by the oil temperature correction section, the hydraulic pressure control section controls the pressure of the hydraulic oil based on the corrected detected temperature of the hydraulic oil.

3. The oil temperature correction device according to claim 1, wherein the oil temperature correction section completes the sensor detection temperature correction process when the temperature of the hydraulic oil detected by the oil temperature sensor is higher than a second threshold value higher than the first threshold value.

4. The oil temperature correction device according to claim 1, wherein the oil temperature correction section determines the heat generation amount of the torque converter by the following equation:

$$\Delta Q = (2\pi/60) \times (Te \times Ne - t_0 \times Te \times Nt)$$

   where $\Delta Q$ is the heat generation amount of the torque converter; Te is the output torque of the driving power source; Ne is the input rotation speed of the torque converter; Nt is the output rotation speed of the torque converter; and the torque ratio t0 of the torque converter.

5. The oil temperature correction device according to claim 4, wherein the oil temperature correction section corrects the detected temperature of the hydraulic oil by the following equation:

$$\text{Temp\_correct} = \text{Temp\_start} + k \int_0^t f(\Delta Q) dt$$

   where Temp_correct is the corrected detected temperature of the hydraulic oil; Temp_start is the temperature of the hydraulic oil detected at the start of the driving power source; t is the time elapsed from the start of the driving power source; $\Delta Q$ is the heat generation amount of the torque converter; and k is the conversion factor.

6. The oil temperature correction device according to claim 1, wherein the temperature sensor is disposed in the oil pan at a position apart from an oil suction hole of an oil pump.

7. The oil temperature correction device according to claim 6, wherein the second threshold value is set depending on a distance between the oil temperature sensor and the oil suction hole of the oil pump in such a manner that the second threshold value becomes closer to the first threshold value as the distance between the oil temperature sensor and the oil suction hole of the oil pump decreases.

8. An oil temperature correction method for an automatic transmission, the automatic transmission having a torque converter and a transmission mechanism to which an output torque of a driving power source is inputted through the torque converter, the oil temperature correction method comprising:

detecting a temperature of hydraulic oil in an oil pan of the transmission mechanism;
determining a heat generation amount of the torque converter; and
when the detected temperature of the hydraulic oil is lower than a first threshold value, performing a sensor detection temperature correction process to correct the detected temperature of the hydraulic oil based on the heat generation amount of the torque converter.

# FIG.1

ENGINE

TRANSMISSION MECHANISM

FRICTIONAL ENGAGEMENT ELEMENTS

SOLENOID

ENGINE ROTATION SENSOR

TURBINE ROTATION SENSOR

ENGINE TORQUE SENSOR

ATCU

OUTPUT SHAFT ROTATION SENSOR

INHIBITOR SWITCH

TEMPERATURE SENSOR

# FIG.2

```
                    ( START )
                        │
                        ▼                                  ┌S101
        ┌───────────────────────────────────────────────┐
        │  READ ENGINE-START OIL TEMPERATURE Temp_start  │
        └───────────────────────────────────────────────┘
                        │
                        ▼           ┌102
                    ╱───────────────────────╲      NO
                   ╱    Temp_start ≦ 0°C ?    ╲──────────────┐
                    ╲───────────────────────╱                │
                        │ YES                                 │
                        ▼                          ┌S103      │
        ┌───────────────────────────────────────────────┐   │
        │                 TIMER START                    │   │
        └───────────────────────────────────────────────┘   │
                        │                                     │
                        ▼                          ┌S104      │
        ┌───────────────────────────────────────────────┐   │
        │     READ CURRENT OIL TEMPERATURE  Temp_now     │   │
        └───────────────────────────────────────────────┘   │
                        │                                     │
        ┌──────────────►│                                     │
        │               ▼            ┌S105                    │
        │           ╱───────────────────────╲      NO         │
        │          ╱    Temp_now ≦ 10°C ?     ╲───────────────┤
        │           ╲───────────────────────╱                 │
        │               │ YES                                 │
        │               ▼                          ┌S106      │
        │ ┌───────────────────────────────────────────────┐  │
        │ │          READ ENGINE ROTATION SPEED Ne,        │  │
        │ │ TURBINE ROTATION SPEED Nt AND ENGINE TORQUE Te │  │
        │ └───────────────────────────────────────────────┘  │
        │               │                          ┌S107      │
        │ ┌───────────────────────────────────────────────┐  │
        │ │    CALCULATE TORQUE CONVERTER TORQUE RATIO t₀   │  │
        │ │        FROM SPEED RATIO e (= Nt/Ne)            │  │
        │ └───────────────────────────────────────────────┘  │
        │               │                          ┌S108      │
        │ ┌───────────────────────────────────────────────┐  │
        │ │ CALCULATE TORQUE CONVERTER HEAT GENERATION AMOUNT ΔQ │
        │ │    ΔQ = (2π/60) × (Te × Ne − t₀ × Te × Nt)     │  │
        │ └───────────────────────────────────────────────┘  │
        │               │                          ┌S109      │
        │ ┌───────────────────────────────────────────────┐  │
        │ │  CALCULATE CORRECTED OIL TEMPERATURE Temp_correct │
        │ │  Temp_correct = Temp_start + k ∫₀ᵗ f(ΔQ)dt     │  │
        │ └───────────────────────────────────────────────┘  │
        │               │                          ┌S110      │
        │ ┌───────────────────────────────────────────────┐  │
        │ │ SET CORRECTED OIL TEMPERATURE Temp_correct AS  │  │
        │ │           REFERENCE OIL TEMPERATURE            │  │
        │ └───────────────────────────────────────────────┘  │
        │               │                                     │
        └───────────────┘                                     ▼
                                                        ( END )
```

- S101: READ ENGINE-START OIL TEMPERATURE Temp_start
- 102: $Temp\_start \leq 0°C$ ?
- S103: TIMER START
- S104: READ CURRENT OIL TEMPERATURE Temp_now
- S105: $Temp\_now \leq 10°C$ ?
- S106: READ ENGINE ROTATION SPEED Ne, TURBINE ROTATION SPEED Nt AND ENGINE TORQUE Te
- S107: CALCULATE TORQUE CONVERTER TORQUE RATIO $t_0$ FROM SPEED RATIO $e$ (= Nt/Ne)
- S108: CALCULATE TORQUE CONVERTER HEAT GENERATION AMOUNT $\Delta Q$; $\Delta Q = (2\pi/60) \times (Te \times Ne - t_0 \times Te \times Nt)$
- S109: CALCULATE CORRECTED OIL TEMPERATURE Temp_correct; $Temp\_correct = Temp\_start + k \int_0^t f(\Delta Q)\,dt$
- S110: SET CORRECTED OIL TEMPERATURE Temp_correct AS REFERENCE OIL TEMPERATURE

# FIG.3

EP 2 362 117 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004125040 A
- JP 2010040514 A